# EUROPÄISCHE PATENTSCHRIFT

(11) **EP 3 805 488 B1**
(45) Veröffentlichungstag und Bekanntmachung des Hinweises auf die Patenterteilung: **20.04.2022**
(21) Anmeldenummer: 19202705.0
(22) Anmeldetag: 11.10.2019
(51) Int. Cl.: E04H 12/34, E04H 12/12, F03D 13/20, F03D 13/10, E04G 13/00

(54) **MODULARER FORMENSATZ FÜR GIESSFORMEN ZUM GIESSEN VON WANDSEGMENTEN EINER TURMWAND EINER WINDENERGIEANLAGE**
MODULAR MOULD FOR CASTING MOULDS FOR CASTING WALL SEGMENTS OF A TOWER WALL OF A WIND TURBINE
ENSEMBLE DE MOULAGE MODULAIRE POUR MOULES DESTINÉ AU MOULAGE DES SEGMENTS D'UNE PAROI DE TOUR D'UNE ÉOLIENNE

(43) Veröffentlichungstag der Anmeldung: 14.04.2021
(73) Patentinhaber: P.E. Concepts GmbH, 45145 Essen (DE)
(72) Erfinder: Böttger, Michael, Witten (DE); Göbel, Nico, 45147 Essen (DE); Husse, Martin Philipp, 54290 Trier (DE)
(74) Vertreter: Raffay & Fleck

(56) Entgegenhaltungen:
- WO-A1-92/01850
- WO-A1-03/069099
- JP-A- 2005 030 066
- US-B1- 9 062 662

## Beschreibung

Die vorliegende Erfindung betrifft den Aufbau von Gießformen für die Herstellung von Beton-Wandsegmenten für die Turmwand einer Windenergieanlage. Sie betrifft insbesondere einen eine Mehrzahl von Formteilen aufweisenden modularen Formensatz zum Aufbau von Gießformen zum Gießen von Beton-Wandsegmenten einer Turmwand eines einen eckigen Querschnitt aufweisenden Turms einer Windenergieanlage. Sie betrifft zudem ein Verfahren zum Aufbau eines einen eckigen Querschnitt aufweisenden, sich in vertikaler Richtung verjüngenden, Betonwände aufweisenden Turms einer Windenergieanlage.

Nicht zuletzt im Zuge von Anstrengungen, die Energiegewinnung umzustellen auf eine ressourcen- und klimaschonende Vorgehensweise, werden vermehrt Windenergieanlagen aufgestellt, vielfach zusammengefasst in großen Windparks, die zusammengenommen dann mit einer beachtlichen Leistung wie ein großes Kraftwerk elektrische Energie zur Verfügung stellen. Diese Windenergieanlagen beinhalten dabei auf Türmen aufgesetzte Gondeln, an denen die durch den Wind angetriebenen Rotoren angeordnet sind. Mit steigender Leistung der einzelnen Windenergieanlage, die einerseits durch größere Nabenhöhen, andererseits durch größere Rotordurchmesser angestrebt wird, werden die Türme der Windenergieanlagen immer höher bzw. immer länger und auch in ihren unteren Abschnitten immer breiter im Durchmesser.

Für den Aufbau der Türme von Windenergieanlagen gibt es zwei häufig genutzte Alternativen. Zum einen werden solche Türme aus Stahlringsegmenten mit einer Stahlwand gebildet. Zum anderen gibt es Türme von Windenergieanlagen, die Wände aus Beton aufweisen und die aus entsprechenden Betonringsegmenten zusammengefügt sind. In jedem Fall ist, dies aus statischen Gründen, der Turm jeweils in einer vertikal sich verjüngenden Querschnittskontur gebildet. Gerade im Bereich von aus Betonsegmenten gebildeten Türmen für Windenergieanlagen sind auch eckige Querschnitte bekannt, zum Beispiel achteckige.

Für die Errichtung von Türmen für Windenergieanlagen aus Betonwandsegmenten werden solche Segmente vorgefertigt und dann zum Ort des Aufbaus der Windenergieanlage verbracht. Dabei kann eine solche Fertigung in zentralen Betonwerken erfolgen, was dann allerdings häufig sehr lange Transportwege bedingt. Da die Betonwandsegmente gerade für höhere Türme von Windenergieanlagen große Dimensionen aufweisen und von hohem Gewicht sind, sind für das Verbringen zum Errichtungsort der Windenergieanlage in der Regel Schwerkrafttransporte, teilweise auch besonders genehmigungspflichtigen Sondertransporte, erforderlich. Entsprechend wird für die Herstellung der Betonwandsegmente für die Errichtung von Türmen von Windenergieanlagen vermehrt auch eine dezentrale Herstellung vorgenommen, indem entweder in kleineren Betonwerken, die näher am Errichtungsort der Windenergieanlage gelegen sind, solche Segmente gegossen und dann über kürzere Strecken zum Errichtungsort der Windenergieanlage verbracht werden, oder aber indem ein mobiles und temporäres Betonwerk in unmittelbarer Nähe des Errichtungsorts der Windenergieanlage aufgebaut wird und dort dann die Betonwandsegmente hergestellt werden. Eine solche Vorgehensweise kommt insbesondere dann in Betracht, wenn größere Windparks mit einer Vielzahl von Windenergieanlagen aufgestellt werden, entsprechend eine Vielzahl von Türmen für Windenergieanlagen dort errichtet wird.

Für die Herstellung der Betonwandsegmente für die Türme von Windenergieanlagen werden Gießformen verwendet, die eine entsprechende Negativform des herzustellenden Betonwandsegments abbilden und in die Frischbeton eingegossen und dort aushärten gelassen wird. Diese Gießformen können - und werden dies in der Regel auch - mit Bewehrungselementen ausgelegt werden, um entsprechende Betonwandsegmente aus bewehrtem bzw. armiertem Beton zu erhalten. Die Gießformen für die Herstellung der Betonwandsegmente sind dabei - ebenso wie die Betonwandsegmente selbst - raumgreifende und sperrige Gegenstände. Dadurch, dass sich der Turm der Windenergieanlage in vertikaler Richtung verjüngt, muss für jedes in vertikaler Lage des Turms in anderer Höhe anzuordnende Ringsegment eine eigene Gießform bereitgestellt werden. Entsprechend ist hier ein umfangreicher Satz an Gießformen vorzuhalten, was einerseits ein hohes Investitionsvolumen erfordert, andererseits ein mögliches Verbringen solcher Gießformen zu einem abgelegenen Produktionsort erschwert, kostenintensiv gestaltet schlimmstenfalls sogar unmöglich macht. Entsprechend ist hierdurch ein Hindernis gegeben, welches die - wegen der hohen Transportkosten der fertigen Betonwandsegmente von einem zentralen Betonwerken zum Errichtungsort der Windenergieanlage erwünschte - Dezentralisierung der Herstellung der Betonwandsegmente für den Turm einer Windenergieanlage erschwert oder gar verhindert. Das Dokument US9062662B offenbart eine Mehrzahl von Formteilen aufweisender modularer Formensatz zum Aufbau von Gießformen zum Gießen von Beton-Wandsegmenten einer Turmwand eines einen eckigen Querschnitt aufweisenden Turms einer Windenergieanlage mit einer Mehrzahl von jeweils eine ebene Innenschale und eine ebene Außenschale aufweisenden, identisch gebildeten Grundwandformteilen, die anhand der Verbindungselementen miteinander verbunden sind.

Vor dem Hintergrund dieser geschilderten Situation und ausgehend von dem bisher bekannten Stand der Technik ist es insoweit Aufgabe der Erfindung, eine Verbesserung zu schaffen, die es ermöglicht, Gießformen für die Herstellung von Beton-Wandsegmenten für den Aufbau eines Turms einer Windenergieanlage mobiler zu gestalten und zudem vorzugsweise die Investitionskosten für die Anschaffung von Gießformen zum Herstellen sämtlicher Beton-Wandsegmente für den Turm einer Windenergieanlage zu verringern. Insbesondere soll hierfür ein besonderer modularer Formensatz zum Aufbau von Gießformen zum Gießen von Beton-Wandsegmenten einer Turmwand eines Turms einer Windenergieanlage angegeben werden. Ein weiterer Aspekt der Aufgabe, die mit der vorliegenden Erfindung gelöst werden soll, besteht in der Angabe eines ökonomischen Verfahrens zum Aufbau eines Turms einer Windenergieanlage aus vorgefertigten Beton-Wandsegmenten.

Diese vorstehend geschilderte Aufgabe wird zunächst gelöst durch einen eine Mehrzahl von Formteilen aufweisenden modularen Formensatz zum Aufbau von Gießformen zum Gießen von Beton-Wandsegmenten einer Turmwand eines einen eckigen Querschnitt aufweisenden Turms einer Windenergieanlage mit den Merkmalen des Patentanspruchs 1. Vorteilhafte Weiterbildungen eines solchen modularen Formensatzes sind in den abhängigen Ansprüchen 2 bis 5 angegeben. Einen weiteren Lösungsaspekt bildet dann noch ein Verfahren zum Aufbau eines einen eckigen Querschnitt aufweisenden, sich in vertikaler Richtung verjüngenden, Betonwände aufweisenden Turms einer Windenergieanlage mit den Merkmalen des Patentanspruchs 6.

In einem ersten Aspekt sieht die Erfindung also einen modularen Formensatz zum Aufbau von Gießformen zum Gießen von Beton-Wandsegmenten einer Turmwand eines einen eckigen Querschnitt aufweisenden Turms einer Windenergieanlage vor, der eine Mehrzahl von Formteilen aufweist. Dieser modularer Formensatz beinhaltet erfindungsgemäß folgende Formteile:
- eine Mehrzahl von jeweils eine gewinkelte Innenschale und eine gewinkelte Außenschale aufweisenden, identisch gebildeten Eckformteilen,
- eine Mehrzahl von jeweils eine ebene Innenschale und eine ebene Außenschale aufweisenden, identisch gebildeten Grundwandformteilen,
- eine Mehrzahl von jeweils eine ebene Innenschale und eine ebene Außenschale aufweisenden, in unterschiedlichen Formbreiten gebildeten Wandformteilen.

Wenn vorstehend von einer Mehrzahl die Rede ist, so ist hiermit eine Zahl von wenigstens zwei gemeint. Die jeweils mögliche Anzahl kann aber auch deutlich höher gewählt sein. In der Praxis wird die Anzahl der jeweils in dem modularen Formensatz vorhandenen Elemente entsprechend dem Bedarf gewählt werden, aus dem modularen Formensatz gleichzeitig eine oder mehrere Teilringsegmentformen, eine oder mehrere Vollringsegmentformen gleichzeitig bilden zu können, dies für identische Ringsegmente und/oder für unterschiedliche Ringsegmente. Dabei wird in der Regel der Formensatz weniger Formteile umfassen, wenn er mobil eingesetzt wird, also zu einem dezentralen Betonwerk in der Nähe des Errichtungsort einer Windenergieanlage bzw. eines Windparks verbracht werden muss oder sogar zu einem temporär in unmittelbarer Nähe des zu errichtenden Windparks aufgebauten Betonwerk. Wird ein erfindungsgemäßer Formensatz indes in einem zentralen Betonwerk, das Beton-Wandsegmente für Türme von Windenergieanlagen in großer Zahl fertigt, eingesetzt, so wird er in der Regel eine höhere Anzahl von Formteilen enthalten, um mehrere Gießformen gleichzeitig bilden und damit Beton-Wandsegmente herstellen zu können.

Erfindungsgemäß weisen die Eckformteile, die Grundwandformteile und die Wandformteile identische Höhen auf und sind jeweils zwei beliebige Teile der Eckformteile, Grundwandformteile und Wandformteile an im Wesentlichen entlang der Höhe der Formteile verlaufenden Seitenkanten zum Bilden einer Gießform miteinander derart verbindbar, dass jeweils die Innenschalen der miteinander verbundenen Formteile zu einer durchgehenden Innenschale zusammengefügt sind und dass jeweils die Außenschale der miteinander verbundenen Formteile zu einer durchgehenden Außenschale zusammengefügt sind. Mit anderen Worten können also aus den unterschiedlichen Formteilen des modularen Formensatzes in einer prinzipiell beliebigen Zusammenstellung Gießformen gebildet werden, die jeweils gleichhoch ragende Teilringsegmente oder Vollringsegmente für die Betonwand des Turms der Windenergieanlage durch Betonguss herzustellen erlauben.

Die Eckformteile beinhalten dabei zwei in einem Winkel zueinander stehende, ebene Abschnitte, jeweils mit einer Innenschale und einer Außenschale, die zwischen sich einen Zwischenraum bilden, in dem die Betonmasse beim Gießen eingefüllt wird. Die Grundwandformteile und die Wandformteile bilden insgesamt ebene, in der Grundform rechteckige oder trapezförmige Elemente aus.

Erfindungsgemäß sind die Eckformteile identisch gebildet und werden entsprechend für die Bildung von Gießformen für Beton-Wandsegmente eines jeden der später übereinander anzuordnenden Ringabschnitte der Turmwand des Turms der Windenergieanlage eingesetzt. Insoweit genügt es zum Beispiel für die Herstellung aller Ringabschnitte der Turmwand, wenn diese als Vollringsegmente in einem Guss gebildet werden sollen, beispielsweise für einen im Querschnitt achteckigen Turm acht Eckformteile bereitzuhalten. Die unterschiedlichen Durchmesser der Ringabschnitte der Turmwand werden dann durch unterschiedliche Kombination von Grundwandformteilen und/oder Wandformteilen erhalten. Entsprechend kann mit einem eine vergleichsweise geringe Anzahl von Formteilen aufweisenden modularen Formensatz sukzessive eine jede Gießform gebildet werden, die für die Herstellung der Ringabschnitte der Turmwand erforderlich ist. Es müssen also entsprechend weniger derartige Formteile vorgehalten werden, was die Investitionskosten deutlich reduziert. Zudem müssen weniger und in den Abmessungen kleinere und im Gewicht geringere Formteile transportiert werden, wenn die Gießform(en) in einem mobilen Einsatz zu einem dezentralen Betonwerk oder sogar direkt zum Errichtungsort der Windenergieanlage(n) zu transportieren sind.

Im Rahmen der Erfindung ist es grundsätzlich denkbar, ggf. für ein Einhalten einer möglichst geringen Formteilgröße sogar sinnvoll, die Formteile Wandformteil und Grundwandformteil nicht als jeweils ein einheitliches Element zu bilden, sondern aus zwei oder sogar mehreren entlang im Wesentlichen in Längsrichtung der Formteile verlaufender Nahten getrennte und zusammenzusetzende Elemente zu bilden. Insoweit sind die Bezeichnungen "Grundwandformteil" und "Wandformteil" breit aufzufassen. Dies können jeweils einheitlich gebildete, einzelne Formteile sein. Sie können aber auch aus mehreren Teilen kombinierte Elemente umfassen.

Mit Vorteil kann, wie dies eine Weiterbildung der Erfindung vorsieht, der Formensatz einen Satz mit einer Anzahl k von Wandformteilen mit jeweils unterschiedlichen Formbreiten aufweisen, wobei die Anzahl k von Wandformteilen um den Wert 1 unter der Hälfte einer Zahl n liegt und wobei die Zahl n entweder eine geradzahlige Anzahl von zum Aufbau des Turms einer Windenergieanlage übereinander anzuordnenden, aus mithilfe von aus dem Formensatz aufgebauten Gießformen gegossenen Beton-Wandsegmenten gebildeten Ringsegmenten oder eine ausgehend von einer ungeradzahligen Anzahl n' von zum Aufbau des Turms einer Windenergieanlage übereinander anzuordnenden, aus mithilfe von aus dem Formensatz aufgebauten Gießformen gegossenen Beton-Wandsegmenten gebildeten Ringsegmenten um den Wert 1 erhöhte Zahl ist.

In dieser Ausgestaltung ist es möglich, den sich verjüngenden Durchmesser des Turms beim Aufbau der Gießformen in einer solchen Weise abzubilden, dass zunächst für die zur Anordnung einer unteren Hälfte des Turmes vorgesehenen Beton-Wandsegmente gerade Wandabschnitte zwischen den Ecken gebildet werden durch einen gerade auslaufenden Schenkel eines Eckformteils, ein daran angeschlossenes Grundwandformteil von einheitlicher Größe und ein daran angeschlossenes Wandformteil unter Verwendung von Wandformteilen für in aufsteigender Höhe des Turms jeweils anzuordnenden Beton-Wandsegmente jeweils abnehmender Formbreite. Für die obere Hälfte des Turmes können dann die der Positionen der Ringsegmente in einer Rangfolge der übereinander angeordneten Segmente entsprechender Rangfolge die auch für den Aufbau des unteren Teils des Turms verwendeten Wandformteile wiederum mit absteigender Breite bei zunehmender Anordnungshöhe der Segmente für die Errichtung der geraden Wandabschnitte der Gießform verwendet werden, ohne dass hier noch die Grundwandformteile zum Einsatz kommen. Entsprechend sind die Abmessungen der Breiten der Grundwandformteile und der Wandformteile so gewählt, dass hier in der beschriebenen Weise vorgegangen werden kann, so dass ein kontinuierlich sich verjüngender Durchmesser des Turmes entsprechend erhalten wird. Werden für die Aufbau des Turms Ringsegmente in einer ungeraden Anzahl benötigt, so kann ein unterstes Ringsegment des unteren Teils bzw. Abschnitts des Turms ausgelassen werden. Dieses muss dann nicht mit produziert werden, wird lediglich mit berechnet bei der Überlegung, aus dem Formensatz nach der Erfindung Gießformen für den Aufbau der einzelnen Ringsegmente zu bilden (wie diese auch nachstehend noch näher erläutert ist).

Die Eckformteile können mit zueinander einen Winkel von 30°, 45°, 60° oder 72° einschließenden Innenschalen, respektive Außenschalen gebildet sein, entsprechend für den Aufbau einer Gießform für Turmwandsegmente von Türmen mit Querschnitten in Form eines regelmäßigen Zwölfecks, eines regelmäßigen Achtecks, eines regelmäßigen Sechsecks oder eines regelmäßigen Fünfecks.

Der modulare Formensatz kann weiterhin eine Mehrzahl von Seitenschlussstücken aufweisen, mit denen sich jeweils der an der Seitenkante eines Formteils zwischen dessen Innenschale und dessen Außenschale gebildete Spalt verschließen lässt. Solche Seitenschlussstücke sind insbesondere dann wichtig, wenn mit dem modularen Formensatz Turmwandsegmente in Teilringform gebildet werden sollen, also eine Gießform aufgebaut wird, die nicht ringförmig geschlossen ist.

Ein erfindungsgemäßer modularer Formensatz kann auch eine Mehrzahl von Stirnschlussstücken zum Verschließen der an der jeweiligen Ober- bzw. Unterkanten eines zugehörigen Formteils zwischen dessen Innenschale und dessen Außenschale gebildeten Spalte aufweisen. Solche Stirnschlussstücke können die stirnseitigen Öffnungen der Spalte der Gießform verschließen. Es können allerdings entsprechende Abschlüsse auch schon an den Formteilen selbst vorgesehen sein, beispielsweise angeformt an einer Innenschale des Formteils oder auch an einer Außenschale des Formteils oder an beiden genannten Schalenteilen.

Wenn vorstehend in Bezug auf die Seitenschlussstücke und/oder die Stirnschlussstücke erneut von einer Mehrzahl solcher Stücke die Rede ist, so ist auch hier das Wort Mehrzahl als wenigstens zwei zu verstehen, kann aber auch eine größere Anzahl bedeuten.

Mit einem wie vorstehend beschriebenen, erfindungsgemäßen modularen Formensatz kann dann ein erfindungsgemäßes Verfahren zum Aufbau eines einen eckigen Querschnitt aufweisenden, sich in vertikaler Richtung verjüngenden, Betonwände aufweisenden Turms einer Windenergieanlage durch Aufeinanderschichten und Verbinden einer Anzahl n an jeweils in vertikaler Richtung aufsteigend einen abnehmenden Durchmesser aufweisenden Ringsegmenten durchgeführt werden. Hierzu werden die Ringsegmente hergestellt unter Verwendung von Gießformen, die aus dem modularen Formensatz gebildet sind. Dabei werden für die Herstellung der vertikal im unteren Turmabschnitt anzuordnenden ersten, der Hälfte der Zahl n, sofern nicht ganzzahlig, aufgerundet auf einen ganzzahligen Wert, abzüglich der Zahl eins entsprechenden Anzahl an Ringsegmenten Gießformen gebildet, die für einen geraden Wandabschnitte jeweils ein Grundwandformteil und ein jeweils für die Ringsegmente unterschiedlich breit gewähltes Wandformfeil sowie für die gewinkelten Wandabschnitte mindestens ein Eckformteil kombinieren. Hierbei können entsprechende Formteile so zusammengefügt werden, dass ein vollständiger Ring des Turmwandabschnittes entsteht, der dann zum Errichten bzw. Fortbauen des Turms auf ein Fundament oder auf einen schon vorhandenen Ring aufgesetzt werden kann. Es können aber auch Teilsegmente des Ringes gebildet werden, die dann später beim Errichten des Turms zusammengefügt werden. Bei dem erfindungsgemäßen Verfahren werden für die Bildung der Gießformen zum Herstellen von für den Aufbau des Turms im unteren Abschnitt in ansteigender Höhe aufzusetzenden, benachbarten Ringsegmenten Wandformteile mit jeweils geringerer Formbreite verwendet. Mit anderen Worten wird für ein jeweils nächsthöher gelegenes Ringsegment eine Gießform gebildet, in der ein Wandformteil zum Einsatz kommt, das die nächst kleinere Formbreite aufweist als der in der Gießform zum Herstellen eines Wandsegments für das unmittelbar darunter anzuordnenden Ringsegment der Turmwand eingesetzte Wandformabschnitt.

Bei dem erfindungsmäßen Verfahren wird weiterhin für die Herstellung des obersten Ringsegments im unteren Turmabschnitt eine Gießform gebildet die für einen geraden Wandabschnitt jeweils entweder ausschließlich ein Grundwandformteil oder ein Grundwandformteil und ein die geringste Formbreite aufweisendes Wandformteil sowie für die gewinkelten Wandabschnitte mindestens ein Eckformteil kombiniert.

Auf diese Weise werden entsprechend Gießformen gebildet und mit den Gießformen Ringsegmente für den Turmbau im unteren Turmabschnitt hergestellt, die im Hinblick auf deren Durchmesser jeweils verjüngt gebildet sind, indem in vertikaler Abfolge der Turmwand Segmente, die mit den jeweiligen Gießformen hergestellt werden, für den Aufbau dieser Gießformen schmaler werdende Wandformteile zum Einsatz kommen. Das hierbei verwendete Grundwandformteil bleibt dabei jeweils gleich, weist eine identische und einheitliche Breite auf.

Beim erfindungsgemäßen Verfahren werden für die Herstellung der vertikal im oberen Turmabschnitt anzuordnenden zweiten, der Hälfte der Zahl n, sofern nicht ganzzahlig, aufgerundet auf einen ganzzahligen Wert, abzüglich der Zahl eins entsprechenden Anzahl an Ringsegmenten Gießformen gebildet, die für einen geraden Wandabschnitte ein jeweils für die Ringsegmente unterschiedlich breites Wandformteil, jedoch kein Grundwandformteil, sowie für die gewinkelten Wandabschnitte mindestens ein Eckformteil kombinieren. Hierbei werden diejenigen Wandformteile wiederverwendet, die auch für die Bildung der Gießformen für die Ringsegmente des unteren Turmabschnitts zum Einsatz gekommen sind.

Es werden für die Herstellung der Beton-Wandsegmente zum Aufbau der in entsprechend ansteigender Höhe aufzusetzen Ringsegmente im oberen Turmabschnitt Gießformen gebildet, die in ihren geraden Wandabschnitten solche Wandformteile einsetzen, die in aufsteigender Reihenfolge der Ringsegmente jeweils eine geringere Formbreite aufweisen. Hierbei werden diejenigen Wandformteile eingesetzt, die entsprechend auch für den Aufbau von Gießformen zur Bildung der in der ansteigenden Folge der Ringsegmente eingesetzten Gießformen verwendet worden sind.

Für die Herstellung des obersten Ringsegments im oberen Turmabschnitt wird schließlich eine Gießform gebildet, die entweder ausschließlich Eckformteile kombiniert oder für einen geraden Wandabschnitt ausschließlich ein die geringste Formbreite aufweisendes Wandformteil sowie für die gewinkelten Wandabschnitte mindestens ein Eckformteil kombiniert.

Wenn die Zahl n, also die Anzahl der Ringsegmente, die übereinander anzuordnend den Turm der Windenergieanlage bilden sollen, eine ungerade Zahl ist, so entfällt das vorstehend beschriebene vertikal unterste Ringsegment im unteren Turmabschnitt, wird der Turmbau mit dem in der vorstehenden Notation als zweites Segment zu bezeichnenden Ringsegment begonnen. Das nach den vorstehenden Überlegungen eigentlich als erstes bzw. unterstes Ringsegment zu bezeichnende Segment muss dann entsprechend auch nicht hergestellt, es muss keine hierfür benötigte Gießform gebildet werden. Das erste Ringsegment wird insoweit für diesen Fall allein für die Bestimmung des Zusammenbaus der (weiteren) Gießformen im unteren und oberen Abschnitt nach den vorstehenden Vorgaben gedanklich mit einbezogen.

Mit der wie vorstehend beschriebenen Vorgehensweise und dem Verfahren für die Errichtung bzw. für den Aufbau eines einen eckigen Querschnitt aufweisenden, sich in vertikaler Richtung verjüngenden, Betonwände aufweisenden Turms einer Windenergieanlage können mit Einsatz einer geringen Anzahl von Formteilen unter vorteilhafter Verwendung des wie vorstehend beschriebenen modularen Formensatzes die erforderlichen Beton-Wandsegmente hergestellt werden, diese insbesondere auch in einem dezentralen Betonwerk, in das der entsprechend modular gebildete Formensatz transportiert worden ist.

Weitere Vorteile und Merkmale der Erfindung ergeben sich aus der nachfolgenden Beschreibung eines möglichen Ausführungsbeispiels anhand der beigefügten Figuren. Dabei zeigen:
- Fig. 1: eine Skizze zur Veranschaulichung des modularen Aufbaus einer Gießform aus einem erfindungsgemäßen Formensatz;
- Fig. 2: in der Darstellung a ein mit einer wie in Fig. 1 dargestellt gebildeten Gießform hergestelltes Beton-Wandsegment für einen Turm einer Windenergieanlage und in der Darstellung b noch einmal die Gießform selbst;
- Fig. 3: in vergrößerter Darstellung eine erste aus einem modularen Formensatz nach der Erfindung gebildete Gießform für die Herstellung eines Beton-Wandsegments für ein einen geringeren Durchmesser aufweisendes, vertikal höher angeordnetes Ringsegment eines Turms einer Windenergieanlage;
- Fig. 4: in vergrößerter Darstellung eine zweite aus einem modularen Formensatz nach der Erfindung gebildete Gießform für die Herstellung eines Beton-Wandsegments für ein einen größeren Durchmesser aufweisendes, vertikal niedriger angeordnetes Ringsegment eines Turms einer Windenergieanlage;
- Fig. 5: in der Darstellung a schematisch den Aufbau eines Turms einer Windenergieanlage aus mittels aus dem erfindungsgemäßen Formensatz gebildeten Gießformen hergestellten Beton-Wandsegmenten und in der Darstellung b eine vergrößerter Darstellung eines Abschnitts des Turms mit auseinandergezogenen Beton-Wandsegmenten;
- Fig. 6: eine schematische Darstellung eines aus Ringsegmenten gebildeten Turms einer Windenergieanlage zur Veranschaulichung des Prinzips des Aufbaus der für die Herstellung der Beton-Wandsegmente der jeweiligen Ringsegmente gebildeten Gießformen; und
- Fig. 7: in zwei Darstellungen a und b ein Beton-Wandsegment in Form eines halben Ringsegments und ein Beton-Wandsegment in Form eines vollen Ringsegments, wie sie mit unterschiedlich aus dem erfindungsgemäßen Formensatz gebildeten Gießformen hergestellt werden können.

Die anliegenden Figuren zeigen verschiedene, jeweils rein schematisch zu verstehende Darstellungen, anhand derer nachfolgend mögliche Ausgestaltungsformen der Erfindung beschrieben werden und die einem vertieften Verständnis der Erfindung und ihrer grundsätzlichen Überlegungen und Ideen dienen sollen. Dabei sind die Figuren keinesfalls als vollwertige Konstruktionszeichnungen oder auch nur als maßstabsgerecht zu verstehen.

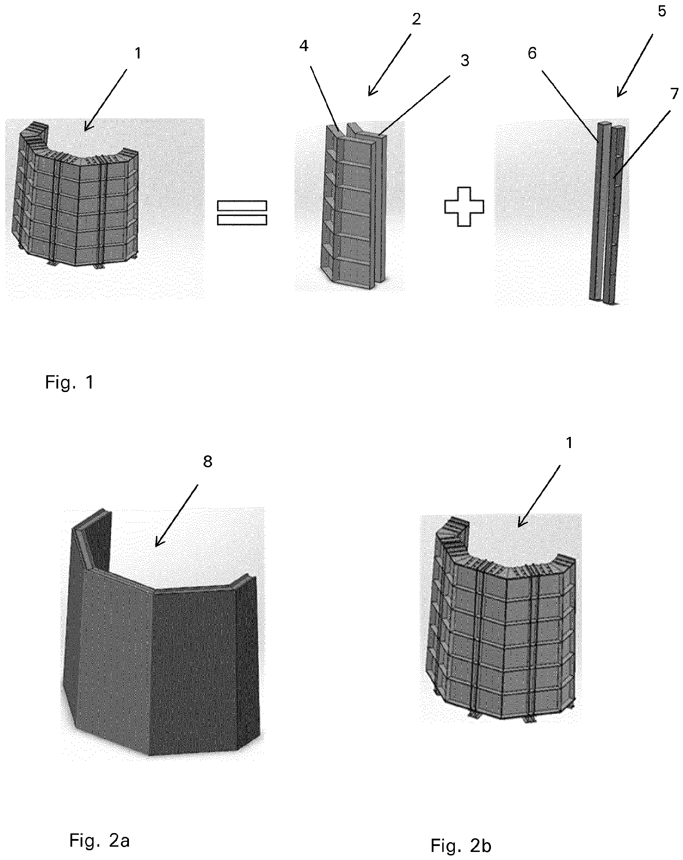

In Figur 1 ist schematisch aufgezeigt, wie aus einem erfindungsgemäßen Formensatz eine Gießform 1 für die Herstellung eines Beton-Wandsegments für den Bau eines Turms einer Windenergieanlage gebildet wird. Schematisch dargestellt ist hier, dass die Gießform 1 zusammengefügt ist durch seitliche Aneinanderreihung und Verbindung von hier insgesamt vier identisch gebildeten Eckformteilen 2 und vier ebenfalls jeweils identisch gebildeten Wandformteilen 5.

Die Eckformteile 2 weisen jeweils eine Innenschale 3 und eine Außenschale 4 auf, die jeweils aus unter Einschluss eines Winkels zueinander geneigt verlaufenden schenkelartigen Plattenelementen gebildet sind. Zwischen Innenschale 3 und Außenschale 4 des Eckformteils 2 ist ein Spaltraum gebildet, in den, wie bei Gießformen üblich, Betonmasse eingebracht werden kann zum Ausbilden des Betongussteils. Auch die Wandformteile 5 haben eine Innenschale 6 und eine Außenschale 7, die unter Ausbildung eines dazwischen liegenden Spaltraumes einander gegenüber liegen. Zur Bildung der Gießform 1 sind die Eckformteile 2 und die Wandformteile 5 entlang ihrer im Wesentlichen vertikal verlaufenden Längskanten miteinander verbunden, genauer gesagt sind dies jeweils die Innenschalen 3 der Eckformteile 2 mit den Innenschalen 6 der Wandformteile 5 und sind dies die Außenschalen 4 der Eckformteile 2 mit den Außenschalen 7 der Wandformteile 5. Zum Abschluss der Gießform 1 sind an den Längsseiten hier nicht näher dargestellte Seitenschlussstücke zum Verschließen der Spalträume angeordnet und jeweils an den Ober- und Unterkanten der Formteile Stirnschlussstücke.

Der erfindungsgemäße Formensatz umfasst eine Mehrzahl von identisch gebildeten Eckformteilen 2 sowie eine Mehrzahl von jeweils in unterschiedlicher Breite ausgebildeten Wandformteilen 5. Er weist zudem Grundwandformteile auf, wie nachstehend noch näher beschrieben und erläutert. Jeweils zwei Formteile des Formensatzes können entlang ihrer Längsseiten beliebig miteinander verbunden und so zu unterschiedlich gestalteten Gießformen kombiniert werden. So kann zum Beispiel eine wie in Figur 1 gezeigte Gießform 1 gebildet werden, die die Herstellung eines wie in Figur 2a dargestellten Beton-Wandsegments 8, das einem halben Ringteil oder Ringsegment des Turms einer Windenergieanlage darstellt, ermöglicht. In Figur 2b ist zur besseren Veranschaulichung die aus dem modularen Formensatz gebildete Gießform 1 noch einmal gezeigt.

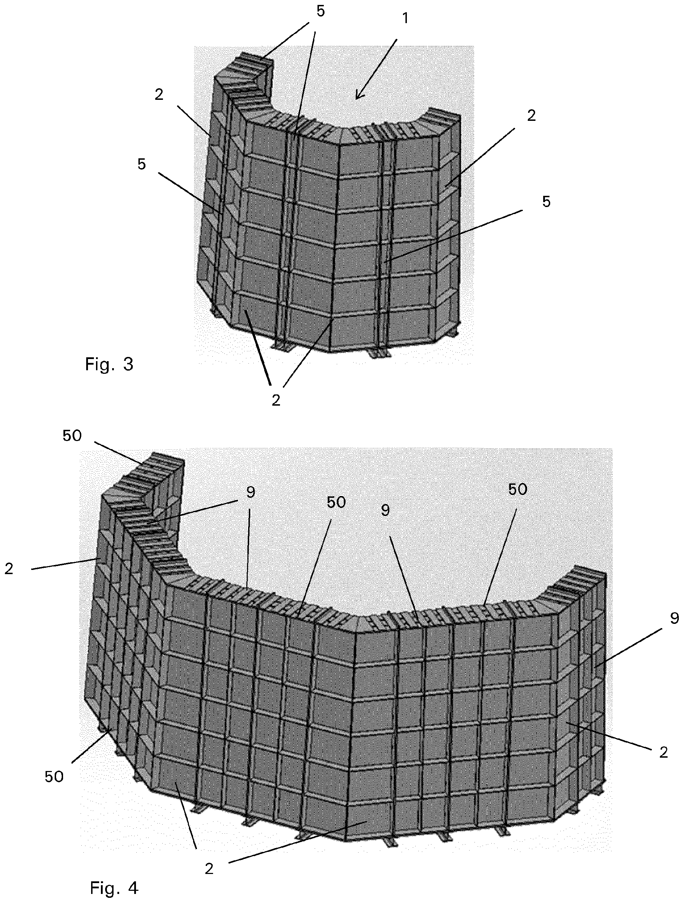

Die Figuren 3 und 4 veranschaulichen nun, wie mit dem erfindungsgemäßen modularen Formensatz unterschiedliche Gießformen für Beton-Wandsegmente des Turms für Ringsegmente zur Anordnung in unterschiedlichen vertikalen Höhenlagen mit unterschiedlichen Durchmessern gebildet werden können. In Figur 3 ist noch einmal die wie auch in Figur 1 und Figur 2b bereits gezeigte Gießform in vergrößerter Darstellung gezeigt, die aus den Eckformteilen 2 und den Wandformteilen 5 zusammengefügt ist. In Figur 4 ist eine Gießform 10 dargestellt, die aus den identisch geformten Eckformteilen 2 und aus in den geraden Wandabschnitten dazwischen angeordneten Wandformteilen 50 mit breiterer Formbreite sowie Grundwandformteilen 9 gebildet ist. Mit dieser Gießform 10 können Beton-Wandsegmente in Form von halben Ringsegmenten zum Aufbau des Turms einer Windenergieanlage gebildet werden, die vertikal an einer weiter unten liegenden Position angeordnet werden, als die mit der Gießform 1 hergestellten Beton-Wandsegmente.

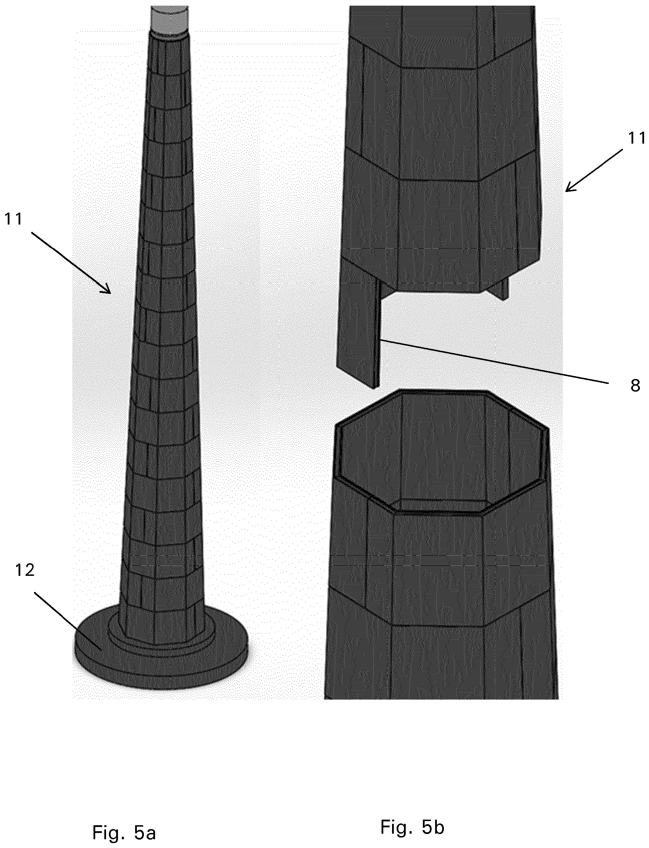

In Figur 5 ist schematisch der Aufbau eines Turms 11 einer Windenergieanlage aus einzelnen Beton-Wandsegmenten gezeigt. Der Turm 11 ruht auf einem Fundament 12, auf den ein unterstes Ringteil aufgesetzt ist. Auf dieses unterste Ringteil sind nachfolgend weitere Ringteile aufgesetzt, die jeweils aus Beton-Wandsegmenten gebildet sind, die mithilfe von aus dem erfindungsgemäßen Formensatz gebildeten Gießformen, wie den Gießformen 1 und 10, hergestellt worden sind. Wie zu erkennen ist, hat der Turm 11 einen eckigen Querschnitt, hier in Form eines regelmäßigen Achtecks, und verjüngt sich im Durchmesser in vertikaler Richtung nach oben hin. In Figur 5b ist in einer vergrößerten Darstellung und auseinandergezogen gezeigt, wie ein Beton-Wandsegment 8 in den Turm integriert ist. Mit einem zweiten, gegenüberliegend anzuordnenden Beton-Wandsegment 8 wird das Ringteil in dieser Ebene geschlossen und ist das Turmsegment vollständig.

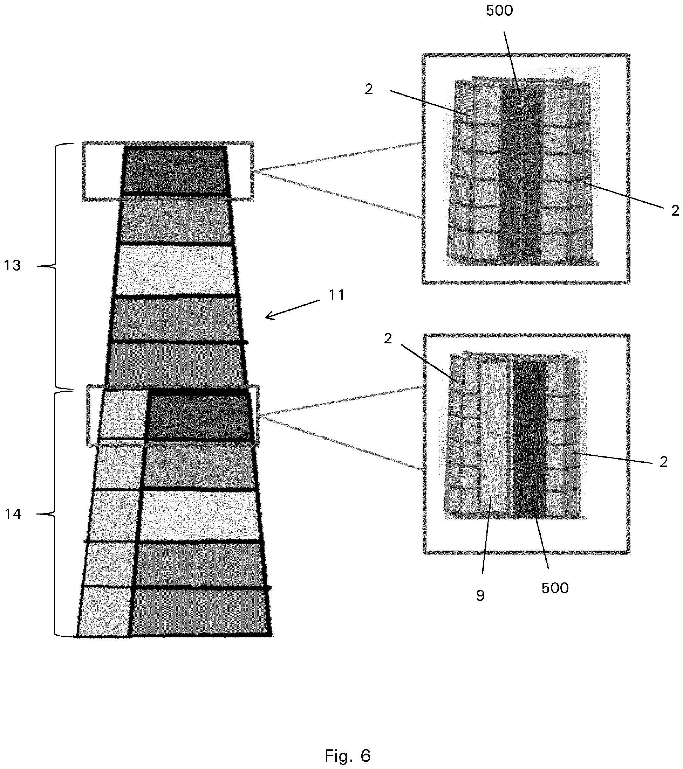

In Figur 6 ist ein Grundprinzip veranschaulicht, nach dem der erfindungsgemäße Formensatz gebildet ist und nach dem aus in mit Hilfe dieses Formensatzes gebildeten Gießformen hergestellten Beton-Wandsegmenten der Turm 11 einer Windenergieanlage gebildet ist. Der Turm 11 ist unterteilt in einen unteren Abschnitt 13 und einen oberen Abschnitt 14, wobei beide Abschnitte 13, 14 jeweils eine gleiche Anzahl von vertikal übereinander angeordneten Ringteilen, beziehungsweise Ringsegmenten aufweisen, in der schematischen Skizze jeweils fünf solcher Teile. In der vergrößerten Darstellung ist zu erkennen, dass die Gießformen für den Aufbau der jeweiligen in der Nummerierung in vertikaler Richtung gesehen im unteren Abschnitt 13 und im oberen Abschnitt 14 einander entsprechenden Segmente, hier der jeweils fünften Segmente, mit den identischen Eckformteilen 2 und, im oberen Abschnitt 14 einem Wandformteil 500 sowie im unteren Abschnitt mit dem identisch gebildeten Wandformteil 500 und einem zusätzlichen Grundwandform Teil 9 gebildet sind. Das Grundwandformteil 9, bzw. ein Grundwandformteil 9 identischer Bauart wird dabei für alle Gießformen zur Herstellung von Beton-Wandbausegmenten im unteren Abschnitt 14 gleichermaßen verwendet, es weist stets die gleiche Formbreite auf. Lediglich die Wandformteile, die für die Herstellung der in den unterschiedlichen Höhenlagen im unteren Abschnitt 13 bzw. im oberen Abschnitt 14 anzuordnenden Beton-Wandsegmente eingesetzt werden, variieren in der Formbreite abhängig von der jeweiligen Höhenpositionen im unteren Abschnitt 13 bzw. oberen Abschnitt 14. Für die Herstellung von an einander entsprechende Positionen, zum Beispiel an der jeweils dritten Position von unten im unteren Abschnitt 13 und im oberen Abschnitt 13 einzusetzenden Beton-Wandsegmenten werden dabei Wandformteile von identischer Bauart und Formbreite eingesetzt. Die Grundwandformteile 9 kommen lediglich in den Gießformen für die Herstellung von im unteren Abschnitt 13 einzusetzenden Beton-Wandsegmenten zum Einsatz. Die für die Herstellung der im oberen Abschnitt 14 einzusetzenden Beton-Wandelemente gebildeten Gießformen enthalten hingegen keine Grundwandformteile 9. Durch diese Vorgehensweise kann in dem erfindungsgemäßen Formensatz die Anzahl der Formteile geringgehalten werden, sodass Investitionskosten gering sind und der Formensatz insgesamt mit wenigen Teilen auskommt und damit vergleichsweise einfach zu transportieren und zu einem lokalen und dezentralen Betonwerk oder sogar bis zu dem Errichtungsort der Windenergieanlage bzw. eines Windparks zu verfrachten ist. Dennoch können mit Hilfe des erfindungsgemäßen Formensatzes sehr flexibel sämtliche Gießformen für die Herstellung von Beton-Wandsegmenten zum Aufbau des gesamten Turms 11 einer Windenergieanlage gebildet werden.

In der Figur 6 ist ein Turm 11 mit einer geradzahligen Anzahl von aufeinandergesetzten Ringsegmenten, hier 10 solcher Ringsegmente, schematisch dargestellt. Wenn nun der Turm 11 stattdessen eine nicht geradzahlige Anzahl von aufeinandergesetzten Ringsegmente umfasst, z.B. 9 solcher Ringsegmente, so würden für die Vorgehensweise bei der Gestaltung der Gießformen gedanklich ein weiteres Ringsegment hinzugenommen, die Aufteilung in oberen Abschnitt und unteren Abschnitt durch Halbierung dieser Zahl erfolgen, und es würden die Gießformen wie vorstehend beschrieben geplant. Allerdings würde das dann unterste (also erste) Ringsegment im unteren Abschnitt beim Aufbau des Turms nicht benötigt, es würde auch nicht hergestellt. Lediglich für die Planung des Formenbaus nach den vorstehend aufgezeigten Überlegungen würden dieses erste und unterste Ringsegment und die für dessen - hypothetische - Herstellung benötigte Gießform(en) mit einbezogen.

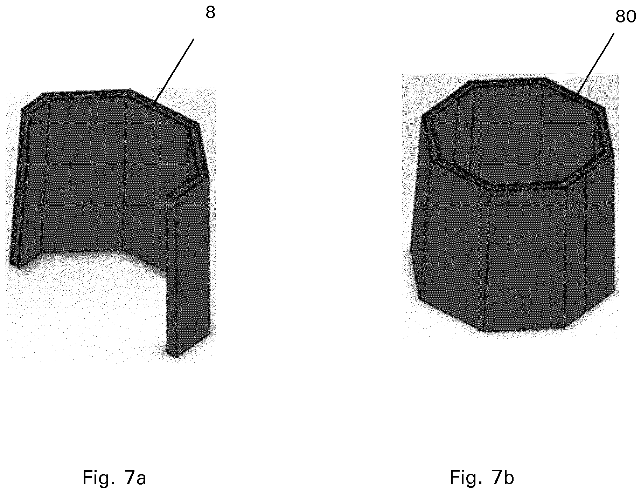

In den Figuren 7a und 7b sind mit Hilfe von aus dem erfindungsgemäßen Formensatz gebildeten Gießformen hergestellte Beton-Wandsegmente gezeigt. Figur 7a zeigt ein Beton-Wandsegment 8, dass die Hälfte eines ringförmigen Turmsegments beziehungslose Turmabschnitts darstellt. Figur 7b zeigt ein Beton-Wandsegment in Form eines Vollringes, das entsprechend mit einer zu einem Vollring zusammengefügten, aus Formteilen des erfindungsgemäßen Formensatzes gebildeten Gießform hergestellt werden kann.

### Bezugszeichen

- 1: Gießform
- 2: Eckformteil
- 3: Innenschale
- 4: Außenschale
- 5: Wandformteil
- 6: Innenschale
- 7: Außenschale
- 8: Beton-Wandsegment
- 9: Grundwandformteil
- 10: Gießform
- 11: Turm
- 12: Fundament
- 13: unterer Abschnitt
- 14: oberer Abschnitt
- 50: Wandformteil
- 80: Beton-Wandsegment
- 500: Wandformteil

## Patentansprüche

1. Eine Mehrzahl von Formteilen (2, 5, 50, 500) aufweisender modularer Formensatz zum Aufbau von Gießformen (1, 10) zum Gießen von Beton-Wandsegmenten (8, 80) einer Turmwand eines einen eckigen Querschnitt aufweisenden Turms (11) einer Windenergieanlage mit folgenden Formteilen (2, 5, 50, 500):
• einer Mehrzahl von jeweils eine gewinkelte Innenschale (3) und eine gewinkelte Außenschale (4) aufweisenden, identisch gebildeten Eckformteilen (2),
• einer Mehrzahl von jeweils eine ebene Innenschale und eine ebene Außenschale aufweisenden, identisch gebildeten Grundwandformteilen (9),
• einer Mehrzahl von jeweils eine ebene Innenschale (6) und eine ebene Außenschale (7) aufweisenden, in unterschiedlichen Formbreiten gebildeten Wandformteilen (5, 50, 500),
wobei die Eckformteile (2), die Grundwandformteile (9) und die Wandformteile (5, 50, 500) identische Höhen aufweisen und wobei jeweils zwei beliebige Teile der Eckformteile (2), Grundwandformteile (9) und Wandformteile (5, 50, 500) an im Wesentlichen entlang der Höhe der Formteile (2, 5, 50, 500) verlaufenden Seitenkanten zum Bilden einer Gießform (1, 10) miteinander derart verbindbar sind, dass jeweils die Innenschalen (3, 6) der miteinander verbundenen Formteile (2, 5, 50, 500) zu einer durchgehenden Innenschale zusammengefügt sind und dass jeweils die Außenschalen (4, 7) der miteinander verbundenen Formteile (2, 5, 50, 500) zu einer durchgehenden Außenschale zusammengefügt sind.

2. Modularer Formensatz nach Anspruch 1, **dadurch gekennzeichnet, dass** er wenigstens einen Satz mit einer Anzahl k von Wandformteilen (5, 50, 500) mit jeweils unterschiedlichen Formbreiten aufweist, wobei die Anzahl k von Wandformteilen (5, 50, 500) um den Wert 1 unter der Hälfte einer Zahl n liegt, wobei die Zahl n entweder eine geradzahlige Anzahl von zum Aufbau des Turms (11) einer Windenergieanlage übereinander anzuordnenden, aus mithilfe von aus dem Formensatz aufgebauten Gießformen (1, 10) gegossenen Beton-Wandsegmenten (8, 80) gebildeten Ringsegmenten oder eine ausgehend von einer ungeradzahligen Anzahl n' von zum Aufbau des Turms (11) einer Windenergieanlage übereinander anzuordnenden, aus mithilfe von aus dem Formensatz aufgebauten Gießformen (1, 10) gegossenen Beton-Wandsegmenten (8, 80) gebildeten Ringsegmenten um den Wert 1 erhöhte Zahl ist.

3. Modularer Formensatz nach einem der vorhergehenden Ansprüche, **dadurch gekennzeichnet, dass** die gewinkelte Innenschale (3) und die gewinkelte Außenschale (4) eines jeden Eckformteils (2) einen Winkel von 30°, 45°, 60° oder 72° zueinander einschließen.

4. Modularer Formensatz nach einem der vorhergehenden Ansprüche, **dadurch gekennzeichnet, dass** er eine Mehrzahl von Seitenschlussstücken, jeweils zum seitlichen Verschließen des an der Seitenkante eines Formteils (2, 5, 50, 500) zwischen dessen Innenschale (3, 6) und dessen Außenschale (4, 7) gebildeten Spalts aufweist.

5. Modularer Formensatz nach einem der vorhergehenden Ansprüche, **dadurch gekennzeichnet, dass** er eine Mehrzahl von Stirnschlussstücken zum Verschließen der an den Ober- bzw. Unterkanten eines zugehörigen Formteils (2, 5, 50, 500) zwischen dessen Innenschale (3, 6) und dessen Außenschale (4, 7) gebildeten Spalte aufweist.

6. Verfahren zum Aufbau eines einen eckigen Querschnitt aufweisenden, sich in vertikaler Richtung verjüngenden, Betonwände aufweisenden Turms einer Windenergieanlage aus einer Anzahl von n an Ringsegmenten, die vertikal übereinander angeordnet und mit einander verbunden werden, wobei die Ringsegmente unter Verwendung von aus einem modularen Formensatz nach einem der vorhergehenden Ansprüche gebildeten Gießformen hergestellt werden,
• wobei für die Herstellung der vertikal im unteren Turmabschnitt anzuordnenden ersten, der Hälfte der Zahl n, sofern nicht ganzzahlig, aufgerundet auf einen ganzzahligen Wert, abzüglich der Zahl eins entsprechenden Anzahl an Ringsegmenten Gießformen gebildet werden, die für einen geraden Wandabschnitt jeweils ein Grundwandformteil und ein jeweils für die Ringsegmente unterschiedlich breit gewähltes Wandformteil sowie für die gewinkelten Wandabschnitte mindestens ein Eckformteil kombinieren,
• wobei für die Bildung von Gießformen für die Herstellung von für den Aufbau des Turms im unteren Turmabschnitt in ansteigender Höhe aufzusetzenden, benachbarten Ringsegmente Wandformteile mit jeweils geringerer Formbreite verwendet werden,
• wobei für das oberste Ringsegment im unteren Turmabschnitt eine Gießformen gebildet wird, die für einen geraden Wandabschnitt jeweils entweder ausschließlich ein Grundwandformteil oder ein Grundwandformteil und ein die geringste Formbreite aufweisendes Wandformteil sowie für die gewinkelten Wandabschnitte mindestens ein Eckformteil kombiniert,
• wobei für die Herstellung der vertikal im oberen Turmabschnitt anzuordnenden zweiten, der Hälfte der Zahl n, sofern nicht ganzzahlig, aufgerundet auf einen ganzzahligen Wert, abzüglich der Zahl eins entsprechenden Anzahl an Ringsegmenten Gießformen gebildet werden, die für einen geraden Wandabschnitt ein jeweils für die Ringsegmente unterschiedlich breit gewähltes Wandformteil, jedoch kein Grundwandformteil, sowie für die gewinkelten Wandabschnitte mindestens ein Eckformteil kombinieren,
• wobei für die Bildung von Gießformen für die Herstellung von für den Aufbau des Turms im oberen Turmabschnitt in ansteigender Höhe aufzusetzenden, benachbarten Ringsegmente jeweils diejenigen Wandabschnitte mit jeweils geringerer Formbreite verwendet werden, wie sie in den geraden Wandabschnitt der Gießform zum Bilden eines in einer Rangfolge in vertikaler Richtung entsprechenden Ringsegments in dem unteren Turmabschnitt verwendet werden,
• wobei für das oberste Ringsegment im oberen Turmabschnitt eine Gießform gebildet wird, die entweder ausschließlich Eckformteile kombiniert oder für einen geraden Wandabschnitt ausschließlich ein die geringste Formbreite aufweisendes Wandformteil sowie für die gewinkelten Wandabschnitte mindestens ein Eckformteil kombiniert,
• wobei, wenn die Zahl n eine ungerade Zahl ist, das vorstehend beschriebene vertikal unterste Ringsegment im unteren Turmabschnitt entfällt, entsprechend nicht hergestellt wird, sondern nur für die Bestimmung des Zusammenbaus der Gießformen im unteren und oberen Abschnitt nach den vorstehenden Vorgaben gedanklich mit einbezogen wird.

## Claims

1. A modular mould set comprising a plurality of mould parts (2, 5, 50, 500) for the construction of casting moulds (1, 10) for casting concrete wall segments (8, 80) of a tower wall of a tower (11) having an angular cross-section of a wind turbine, having the following mould parts (2, 5, 50, 500):
• a plurality of identically formed corner mould parts (2) each having an angled inner shell (3) and an angled outer shell (4),
• a plurality of identically formed base wall mould parts (9) each having a flat inner shell and a flat outer shell,
• a plurality of wall mouldings (5, 50, 500) each having a flat inner shell (6) and a flat outer shell (7) and formed in different mould widths,
wherein the corner mould parts (2), the base wall mould parts (9) and the wall mould parts (5, 50, 500) have identical heights and wherein in each case any two parts of the corner mould parts (2), base wall mould parts (9) and wall mould parts (5, 50, 500) can be connected to one another at lateral edges extending substantially along the height of the mould parts (2, 5, 50, 500) to form a casting mould (1, 5, 50, 500), 10) can be connected to one another in such a way that in each case the inner shells (3, 6) of the interconnected mould parts (2, 5, 50, 500) are joined together to form a continuous inner shell and in each case the outer shells (4, 7) of the interconnected mould parts (2, 5, 50, 500) are joined together to form a continuous outer shell.

2. A modular mould set according to claim 1, **characterised in that** it comprises at least one set with a number k of wall mouldings (5, 50, 500) of different mould widths in each case, the number k of wall mould parts (5, 50, 500) being less than half a number n by the value 1, the number n being either an even number of concrete wall segments (8, 80) to be arranged one above the other in order to construct the tower (11) of a wind turbine and formed from concrete segments (8, 80) cast with the aid of casting moulds (1, 10) constructed with the aid of casting moulds (1, 10) from the set of moulds, or is a number which is increased by the value 1 starting from an odd number n of ring segments which are to be arranged one above the other for the construction of the tower (11) of a wind turbine and are formed from concrete wall segments (8, 80) cast with the aid of casting moulds (1, 10) constructed from the set of moulds.

3. A modular mould set according to any one of the preceding claims, **characterised in that** the angled inner shell (3) and the angled outer shell (4) of each corner moulding (2) enclose an angle of 30°, 45°, 60° or 72° with respect to each other.

4. A modular mould set according to any one of the preceding claims, **characterised in that** it comprises a plurality of side end pieces, each for laterally closing the gap formed at the side edge of a moulded part (2, 5, 50, 500) between its inner shell (3, 6) and its outer shell (4, 7).

5. A modular mould set according to any one of the preceding claims, **characterised in that** it comprises a plurality of end fittings for closing the gaps formed at the upper or lower edges of an associated moulding (2, 5, 50, 500) between its inner shell (3, 6) and its outer shell (4, 7).

6. A method of constructing an angular cross-section, vertically tapering, concrete-walled tower of a wind turbine from a number n of ring segments arranged vertically one above the other, the tower comprising a number n of ring segments arranged vertically one above the other and connected to each other, wherein the ring segments are produced using moulds formed from a modular mould set according to any one of the preceding claims,
• wherein, for the production of the first ring segments to be arranged vertically in the lower tower section, the number of ring segments corresponding to half the number n, if not an integer, rounded up to an integer value, minus the number one, are formed, whereby combining one base wall mould part for each straight wall segment and a wall moulding of different widths for each of the ring segments and at least one corner moulding for the angled wall sections,
• whereby for the formation of casting moulds for the production of adjacent ring segments to be set up in rising height for the construction of the tower in the lower tower section, wall mould parts with a smaller mould width are used in each case,
• wherein a casting mould is formed for the uppermost ring segment in the lower tower section, which mould combines for a straight wall section in each case either exclusively a base wall mould part or a base wall mould part and a wall mould part having the smallest mould width, and for the angled wall sections at least one corner mould part,
• wherein, for the production of the second number of ring segments to be arranged vertically in the upper tower section, which number corresponds to half the number n, if not an integer, rounded up to an integer value, minus the number one, casting moulds are formed which combine for a straight wall section a wall moulding selected in each case for the ring segments of different width, but no base wall moulding, and for the angled wall sections at least one corner moulding,
• wherein for the formation of casting moulds for the production of adjacent ring segments to be set up in rising height for the construction of the tower in the upper tower section, in each case those wall sections with a smaller mould width in each case are used as in the straight wall section of the casting mould for forming a ring segment corresponding in a ranking order in the vertical direction in the lower tower section,
• wherein for the uppermost ring segment in the upper tower section a casting mould is formed which either combines exclusively corner mould parts or for a straight wall section combines exclusively a wall mould part having the smallest mould width as well as for the angled wall sections at least one corner mould part, wherein, if the number n is an odd number, the vertically lowermost ring segment in the lower tower section described above is omitted, is accordingly not produced but is only mentally included for determining the assembly of the casting moulds in the lower and upper sections according to the above specifications.

## Revendications

1. Ensemble de moulage modulaire comprenant une pluralité de parties de moule (2, 5, 50, 500) pour la construction de moules de coulée (1, 10) pour le coulage de segments de paroi en béton (8, 80) d'une paroi de tour (11) ayant une section transversale angulaire d'une éolienne, avec les parties de moule suivantes (2, 5, 50, 500) :
• une pluralité de parties de moule d'angle (2) de forme identique, chacune ayant une coquille intérieure angulaire (3) et une coquille extérieure angulaire (4),
• une pluralité de parties de moule de paroi de base (9) de forme identique, chacune ayant une coque intérieure plate et une coque extérieure plate,
• une pluralité de moulures de paroi (5, 50, 500) ayant chacune une coque intérieure plate (6) et une coque extérieure plate (7) et formées dans différentes largeurs de moule,
dans lequel les parties de moule d'angle (2), les parties de moule de paroi de base (9) et les parties de moule de paroi (5, 50, 500) ont des hauteurs identiques et dans lequel, à chaque fois, deux parties quelconques des parties de moule d'angle (2), des parties de moule de paroi de base (9) et des parties de moule de paroi (5, 50, 500) peuvent être reliées entre elles sur des bords latéraux s'étendant sensiblement le long de la hauteur des parties de moule (2, 5, 50, 500) pour former un moule de coulée (1, 5, 50, 500), 10) peuvent être reliées les unes aux autres de telle sorte que, dans chaque cas, les coquilles intérieures (3, 6) des parties de moule interconnectées (2, 5, 50, 500) sont reliées ensemble pour former une coquille intérieure continue et, dans chaque cas, les coquilles extérieures (4, 7) des parties de moule interconnectées (2, 5, 50, 500) sont reliées ensemble pour former une coquille extérieure continue.

2. Ensemble de moulage modulaire selon la revendication 1, **caractérisé en ce qu'**il comprend au moins un jeu avec un nombre k de parties de moule de paroi (5, 50, 500) de largeurs de moule respectivement différentes, le nombre k de parties de moule de paroi (5, 50, 500) étant inférieur à la moitié d'un nombre n de valeur 1, le nombre n étant soit un nombre pair de segments de paroi en béton (8, 80) à disposer les uns au-dessus des autres pour construire la tour (11) d'une éolienne et formés de segments de béton (8, 80) coulés à l'aide de moules de coulée (1, 10) construits à l'aide de moules de coulée (1, 10) de l'ensemble de moulage, soit un nombre qui est augmenté de la valeur 1 à partir d'un nombre impair n de segments d'anneau qui doivent être disposés les uns au-dessus des autres pour la construction de la tour (11) d'une éolienne et qui sont formés de segments de paroi en béton (8, 80) coulés à l'aide de moules de coulée (1, 10) construits à partir de l'ensemble de moulage.

3. Ensemble de moulage modulaire selon l'une quelconque des revendications précédentes, **caractérisé en ce que** la coquille intérieure angulaire (3) et la coquille extérieure angulaire (4) de chaque moulure d'angle (2) forment un angle de 30°, 45°, 60° ou 72° l'une par rapport à l'autre.

4. Ensemble de moulage modulaire selon l'une quelconque des revendications précédentes, **caractérisé en ce qu'**il comprend une pluralité de pièces d'extrémité latérales, chacune pour fermer latéralement l'espace formé au niveau du bord latéral d'une pièce moulée (2, 5, 50, 500) entre son enveloppe intérieure (3, 6) et son enveloppe extérieure (4, 7).

5. Ensemble de moulage modulaire selon l'une quelconque des revendications précédentes, **caractérisé en ce qu'**il comprend une pluralité d'embouts pour fermer les espaces formés au niveau des bords supérieurs ou inférieurs d'un moulage associé (2, 5, 50, 500) entre sa coque intérieure (3, 6) et sa coque extérieure (4, 7).

6. Procédé de construction d'une tour d'éolienne à section angulaire, effilée verticalement et à paroi en béton, à partir d'un nombre n de segments d'anneau disposés verticalement les uns au-dessus des autres, la tour comprenant un nombre n de segments d'anneau disposés verticalement les uns au-dessus des autres et reliés les uns aux autres, dans lequel les segments d'anneau sont réalisés à l'aide de moules formés à partir d'un Ensemble de moulage modulaires selon l'une quelconque des revendications précédentes,
• dans lequel, pour la fabrication des premiers segments d'anneau à disposer verticalement dans la partie inférieure de la tour, on forme le nombre de segments d'anneau correspondant à la moitié du nombre n, si ce n'est pas un nombre entier, arrondi à une valeur entière, moins le nombre un, en combinant une partie de moule de paroi de base pour chaque segment de paroi droit et
une pièce moulée de paroi de différentes largeurs pour chacun des segments d'anneau et au moins une pièce moulée d'angle pour les sections de paroi angulaires,
• pour la formation de moules de coulée destinés à la fabrication de segments d'anneau adjacents à monter en hauteur pour la construction de la tour dans la partie inférieure de la tour, on utilise des parties de moule de paroi ayant une largeur de moule plus petite,
• dans lequel un moule de coulée est formé pour le segment d'anneau supérieur dans la section inférieure de la tour, lequel moule combine pour une section de paroi droite soit exclusivement une partie de moule de paroi de base, soit une partie de moule de paroi de base et une partie de moule de paroi ayant la plus petite largeur de moule, et pour les sections de paroi angulaires au moins une partie de moule d'angle,
• dans lequel, pour la fabrication du deuxième nombre de segments d'anneau à disposer verticalement dans la partie supérieure de la tour, qui correspond à la moitié du nombre n, s'il ne s'agit pas d'un nombre entier, arrondi à une valeur entière, moins le nombre un, on forme des moules de coulée qui combinent, pour une partie de paroi droite, une moulure de paroi choisie respectivement pour les segments d'anneau de largeur différente, mais aucune moulure de paroi de base, et pour les parties de paroi angulaires, au moins une moulure d'angle,
• dans lequel, pour la formation de moules de coulée destinés à la fabrication de segments d'anneau adjacents à monter en hauteur pour la construction de la tour dans la partie supérieure de la tour, on utilise à chaque fois les parties de paroi ayant une largeur de moule plus petite que dans la partie de paroi droite du moule de coulée pour former un segment d'anneau correspondant dans un ordre hiérarchique dans la direction verticale dans la partie inférieure de la tour,
• dans lequel, pour le segment d'anneau le plus haut dans la section de tour supérieure, on forme un moule de coulée qui, soit combine exclusivement des parties de moule de coin, soit combine exclusivement, pour une section de paroi droite, une partie de moule de paroi ayant la plus petite largeur de moule ainsi que, pour les sections de paroi angulaires, au moins une partie de moule de coin, dans lequel, si le nombre n est un nombre impair, le segment d'anneau le plus bas verticalement dans la section de tour inférieure décrite ci-dessus est omis, n'est donc pas fabriqué, mais est seulement inclus mentalement pour déterminer l'assemblage des moules de coulée dans les sections inférieure et supérieure selon les spécifications ci-dessus.
